(19) Europäisches Patentamt

European Patent Office

Office européen des brevets

(11) EP 0 605 277 B1

(12) **FASCICULE DE BREVET EUROPEEN**

(45) Date de publication et mention
de la délivrance du brevet:
**09.06.1999 Bulletin 1999/23**

(51) Int. Cl.⁶: $C02F\ 1/78$, $C02F\ 1/72$

(21) Numéro de dépôt: **93403043.8**

(22) Date de dépôt: **15.12.1993**

(54) **Procédé et réacteur pour l'ozonation optimisée des eaux destinées à la consommation humaine**

Verfahren und Vorrichtung zur optimalen Ozonisierung von, für den menschlichen Verbrauch, bestimmtem Wasser

Process and reactor for optimized ozonation of water used for human consumption

(84) Etats contractants désignés:
**AT BE CH DE DK ES GB GR IE IT LI LU MC NL PT SE**

(30) Priorité: **28.12.1992 FR 9215787**

(43) Date de publication de la demande:
**06.07.1994 Bulletin 1994/27**

(73) Titulaire: **DEGREMONT S.A.**
**F-92508 Rueil-Malmaison Cédex (FR)**

(72) Inventeur: **Richard, Yves**
**F-78160 Marly le Roi (FR)**

(74) Mandataire:
**Armengaud Ainé, Alain**
**Cabinet ARMENGAUD AINE**
**3 Avenue Bugeaud**
**75116 Paris (FR)**

(56) Documents cités:
**EP-A- 0 549 413**      **DE-A- 3 921 436**
**FR-A- 2 563 208**

• **DATABASE WPI Section Ch, Week 8210, Derwent Publications Ltd., London, GB; Class D15, AN 82-18844E & PATENT ABSTRACTS OF JAPAN vol. 6, no. 90 (C-104)27 Mai 1982 & JP-A-57 019 088 (EBARA INFILCO) 1 Février 1982**
• **PATENT ABSTRACTS OF JAPAN vol. 5, no. 24 (C-43)13 Février 1981 & JP-A-55 149 688 (MITSUBISHI ELECTRIC) 21 Novembre 1980**
• **DATABASE WPI Section Ch, Week 8319, Derwent Publications Ltd., London, GB; Class A97, AN 83-45193K & PATENT ABSTRACTS OF JAPAN vol. 7, no. 143 (C-172)22 Juin 1983 & JP-A-58 055 088 (SUIDO KIKO) 1 Avril 1983**
• **: "L'ozonation dans la production d'eau potable", L'EAU, L'INDUSTRIE, LES NUISANCES, , MARS 1983, Vol. 72, no. , pages 33 à 37**

## Description

La présente invention concerne un réacteur perfectionné destiné à assurer une optimisation de l'ozonation des eaux destinées notamment à la consommation humaine.

A l'heure actuelle, le procédé d'ozonation, assurant la désinfection des eaux est mis en oeuvre à l'aide de deux enceintes ou cuves de contact qui sont disposées en série. Le but de la première cuve de contact est de répondre à la demande chimique de l'eau en ozone et d'établir, à l'entrée de la seconde cuve de contact, un taux d'ozone prédéterminé (C), par exemple 0,4 mg/l. Le but de la seconde cuve de contact est de permettre de maintenir le taux d'ozone établi à l'entrée, pendant un temps (T) nécessaire à l'obtention des conditions de désinfection que l'on désire mettre en oeuvre ( C x T = une valeur requise ).

Des études récentes conduites sur l'action de l'ozone en tant qu'oxydant ont mis en évidence deux actions de l'ozone : l'oxydation directe et l'oxydation radicalaire. A cet égard, on pourra se reporter au certificat d'addition français 8817134 (2640957). En outre, les moyens modernes d'analyse ont permis d'étudier les cinétiques d'oxydation et de mettre en évidence deux types de cinétiques de réaction : les réactions rapides, qui se produisent avec des temps de réaction courts, mesurés en seconde, et des réactions lentes qui se produisent avec des temps de réaction longs, se mesurant en minutes.

On sait que l'action radicalaire peut être intensifiée par introduction d'un promoteur de production de radical OH, par exemple du péroxyde d'hydrogène, un rayonnement ultraviolet... (procédé dénommé "Pérozone" développé et mis au point par les Sociétés Lyonnaise des Eaux Dumez et Degrémont). Généralement, le péroxyde d'hydrogène est introduit soit en tête des deux cuves de contact, soit en un point situé entre les deux cuves.

Une telle façon d'opérer présente l'inconvénient que le péroxyde d'hydrogène réagit avec l'ozone de l'eau, en le faisant disparaître. Il en résulte une impossibilité de mettre en oeuvre la régulation de la quantité d'ozone à produire et à injecter respectivement dans les deux cuves de contact, cette régulation étant effectuée, de façon classique, par la mesure de l'ozone dans l'eau en prenant en compte à la fois les variations du débit traité et de la qualité de l'eau à traiter.

Fr-A-2 563 208 décrit un procédé de traitement d'eau par l'ozone selon lequel, au moment où l'action oxydante de l'ozone, sur les matières organiques présentes dans l'eau à traiter, atteint son maximum et qu'il ne reste plus dans l'eau que des matières difficilement oxydables, on ajoute à l'eau ozonée, une solution de péroxyde d'hydrogène avant de poursuivre le traitement par l'ozone. Cette publication antérieure prévoit uniquement un asservissement du débit de péroxyde au débit d'eau à traiter en mettant en oeuvre une pompe doseuse et un débitmètre.

L'article 《 l'ozonation dans la production d'eau potable 》 de MM Bourbigot, pages 33-37 n° 72 - mars 1983 - 《 L'eau, l'industrie, les nuisances 》 fait connaître un procédé d'ozonation en vue de la désinfection de l'eau potable mettant en oeuvre deux colonnes de contact dans lesquelles l'eau transite successivement. Une dégradation plus poussée de la micropollution est envisagée en favorisant les réactions radicalaires par des procédés d'oxydation combinés, tels que l'ozonation avec adjonction de peroxyde d'hydrogène.

La présente invention se propose d'optimiser les injections d'ozone en fonction des paramètres mentionnés ci-dessus, en éliminant les inconvénients des solutions antérieures mentionnées ci-dessus.

En conséquence, la présente invention a pour objet un procédé pour l'ozonation optimisée des eaux destinées à la consommation humaine dans lequel l'action d'oxydation directe de l'ozone est complétée par l'action d'oxydation radicalaire de l'ozone, caractérisé en ce qu'il comporte les étapes successives suivantes :

a) soumettre l'eau à traiter, dans une première cuve de contact à l'action oxydante directe et rapide d'ozone mis au contact du liquide à traiter dans ladite cuve ;

b) contrôler la quantité d'ozone à injecter lors de l'étape (a), en mesurant la concentration en ozone résiduel, dans le liquide à traiter, nécessaire à la désinfection ;

c) désinfecter le liquide provenant de l'étape (a) en injectant, dans une seconde cuve de contact recevant le liquide provenant de ladite première cuve, la quantité d'ozone nécessaire au maintien dans le liquide à traiter de la concentration en ozone résiduel nécessaire à ladite désinfection ;

d) réaliser une régulation de la quantité d'ozone injectée lors de l'étape(c), ladite régulation étant effectuée par une mesure de l'ozone résiduel à la sortie de ladite seconde cuve, le temps de contact dans cette dernière étant déterminé de manière que le produit taux d'ozone résiduel C X T soit égal à la valeur requise ;

e) injecter, outre de l'ozone dans une troisième cuve de contact recevant le liquide à traiter provenant de ladite seconde cuve, une quantité de péroxyde d'hydrogène en vue d'augmenter la quantité de radicaux OH disponible pour la réaction avec les polluants à éliminer par oxydation ;

f) réaliser une régulation de la quantité d'ozone injectée dans ladite troisième cuve, proportionnellement au débit du liquide à traiter et une régulation de la quantité de péroxyde d'hydrogène injectée, qui est également fonction du liquide à traiter, la régulation étant réalisée de manière à maintenir à une valeur prédéterminée le rapport massique péroxyde d'hydrogène/ozone et,

g) évacuer l'eau traitée de ladite troisième cuve.

L'invention vise également un réacteur pour la mise en oeuvre du procédé défini ci-dessus.

Ce réacteur est caractérisé en ce qu'il comporte, disposées en série :

- une première cuve de contact recevant l'eau à traiter, comportant des moyens pour l'injection d'ozone dans le liquide à traiter et un système de régulation pour le contrôle de la quantité d'ozone devant être injectée dans ladite première cuve ainsi qu'un capteur positionné sur la sortie de ladite première cuve afin de mesurer la concentration en ozone résiduel nécessaire à la désinfection, dans le liquide à traiter ;
- une seconde cuve de contact comportant des moyens pour injecter dans le liquide provenant de ladite première cuve, la quantité d'ozone nécessaire à la désinfection dudit liquide et un système de régulation de la quantité d'ozone à injecter dans ladite seconde cuve, ainsi qu'un capteur mesurant la quantité d'ozone résiduel à la sortie de ladite cuve et,
- une troisième cuve de contact comportant des moyens pour injecter simultanément de l'ozone et du péroxyde d'hydrogène dans le liquide provenant de ladite seconde cuve et un premier système de régulation de la quantité d'ozone injectée, ainsi qu'un capteur mesurant le débit du liquide à traiter , ledit premier système de régulation contrôlant la quantité d'ozone injectée en fonction dudit débit et, un second système de régulation de la quantité de péroxyde d'hydrogène injectée, ledit second système de régulation étant sous la commande dudit capteur.

Selon la présente invention, chacune des cuves ou l'une quelconque de celles-ci de contact peut comporter des moyens de cloisonnement tels que notamment cloisons, baffles, etc..., dont le nombre et la disposition sont choisis de manière à permettre l'établissement d'un flux piston au travers de la cuve considérée.

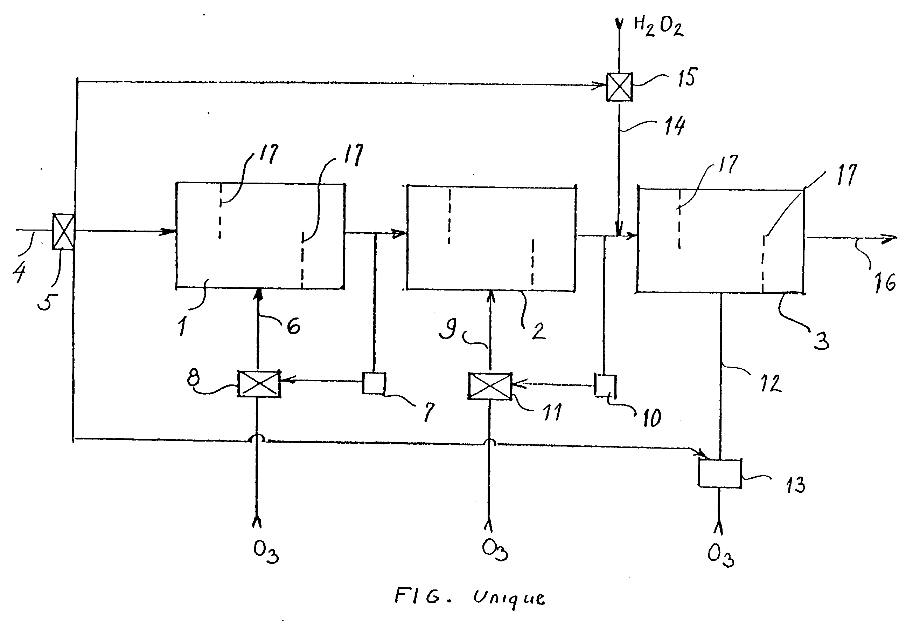

D'autres caractéristiques et avantages de la présente invention ressortiront de la description faite ci-après en référence au dessin annexé dont la figure unique est une représentation schématique d'un réacteur réalisé selon la présente invention.

Ainsi qu'on l'a précisé ci-dessus, un réacteur selon l'invention pour l'ozonation des eaux destinées à la consommation humaine comporte trois cuves ou tours de contact disposées en série respectivement 1 , 2 et 3.

La première cuve de contact 1 est destinée à l'action oxydante directe et rapide par l'ozone, le but de cette première zone étant de répondre à la demande chimique instantanée en ozone de l'eau à traiter. L'eau à traiter est délivrée à cette cuve 1 par une canalisation 4 sur laquelle est interposé un système de comptage 5 qui permet d'en contrôler le débit.

L'ozone est introduit dans cette première cuve par une conduite 6, cette injection d'ozone pouvant être réalisée soit sous la forme d'un mélange gazeux, soit sous la forme d'une solution concentrée en ozone. La durée de mise en contact de l'eau à traiter et de l'ozone dans cette première cuve est déterminée essentiellement par l'hydraulique du système de mise en contact, ce temps de contact pouvant aller de quelques secondes à deux minutes. A la sortie de cette première cuve, la concentration en ozone (C), dans le liquide à traiter, atteint la valeur prédéterminée, requise en vue de la désinfection.

Cette première cuve comporte un système de régulation 8 permettant de contrôler la quantité d'ozone devant être injectée dans la première cuve 1, cette régulation étant effectuée à partir de la mesure de la concentration en ozone obtenue à l'aide d'un capteur 7.

La seconde zone de contact 2 est destinée à assurer la désinfection du liquide. Cette zone de contact reçoit le liquide à traiter provenant de la première cuve 1, la concentration en ozone de ce liquide à traiter présentant la valeur prédéterminée en vue de sa désinfection, comme précisé ci-dessus. La quantité d'ozone qui est introduit dans cette seconde cuve par une canalisation 9, sous forme d'un mélange gazeux ou sous forme d'un mélange concentré en ozone, est déterminée de manière à maintenir, dans le liquide à traiter, la concentration en ozone (C), nécessaire à une bonne désinfection de l'eau. Cette seconde cuve de contact 2 comporte un système de régulation 11 de la quantité d'ozone devant y être injectée. Cette régulation est effectuée à partir de la mesure de l'ozone à la sortie de cette cuve 2, obtenue à l'aide d'un capteur 10. Le temps de contact (T) entre le liquide à traiter et l'ozone est déterminé de manière à obtenir un produit (C) x (T) convenant au but recherché.

La troisième cuve de contact 3 est destinée à assurer l'action radicalaire de l'ozone, cette cuve comportant une introduction de péroxyde d'hydrogène. Le temps de contact de cette cuve est déterminé en fonction des polluants à éliminer, en prenant en compte à la fois leur nature, leur concentration et le résultat recherché. Cette zone comporte une injection d'ozone 12, selon une quantité qui dépend des mêmes facteurs. De la même façon que dans les cuves précédentes, l'ozone peut être injecté soit sous la forme d'un mélange gazeux, soit sous la forme d'une solution concentrée d'ozone. La quantité d'ozone est introduite proportionnellement au débit traité. La cuve 3 comporte donc un système de régulation 13 contrôlant cette quantité d'ozone introduite en fonction de la mesure du débit du fluide à traiter 4, obtenue par le système de comptage 5.

Le péroxyde d'hydrogène est introduit dans la cuve 3 par l'intermédiaire d'une conduite 14, la quantité de péroxyde d'hydrogène ainsi introduite permettant d'augmenter la quantité de radicaux OH disponibles pour la réaction avec les polluants à oxyder. La réaction du péroxyde d'hydrogène avec l'ozone, dans la cuve 3, réduit la concentration en ozone à un niveau tel que la régulation de l'ozone injecté par la mesure du taux mesuré est irréaliste et peu fiable. En conséquence, et selon la présente invention, la quantité de péroxyde d'hydrogène injecté dans la cuve 3 par la conduite 14 est régulée proportionnellement au débit traité. La cuve comporte donc un système de régulation 15 qui est commandé par la mesure du débit de l'eau à traiter, cette mesure étant obtenue à partir du capteur 5. La régulation de la quantité de péroxyde ainsi injecté est réalisée de telle manière que le rapport massique péroxyde d'hydrogène/ozone soit maintenu à tout instant, à une valeur prédéterminée en laboratoire.

L'eau traitée est évacuée en 16 de la troisième cuve 3. Cette eau est parfaitement désinfectée et elle ne contient plus qu'une concentration en péroxyde d'hydrogène qui est inférieure à celle exigée par les dispositions réglementaires.

Selon la présente invention, chacune (ou l'une quelconque) des cuves de contact 1, 2, 3 peut comporter des systèmes de cloisonnement tels que cloisons, baffles 17 ou équivalents, dont le nombre et la disposition sont choisis afin d'obtenir un flux piston au travers de la cuve considérée.

Il demeure bien entenu que la présente invention n'est pas limitée aux exemples de réalisation décrits et/ou représentés ici, mais qu'elle en englobe toutes les variantes.

## Revendications

1. Procédé pour l'ozonation optimisée des eaux destinées à la consommation humaine dans lequel l'action d'oxydation directe de l'ozone est complétée par l'action d'oxydation radicalaire de l'ozone, caractérisé en ce qu'il comporte les étapes successives suivantes :

   a) soumettre l'eau à traiter, dans une première cuve de contact (1) à l'action oxydante directe et rapide d'ozone mis au contact du liquide à traiter dans ladite cuve ;

   b) contrôler la quantité d'ozone à injecter lors de l'étape (a), en mesurant la concentration en ozone résiduel, dans le liquide à traiter, nécessaire à la désinfection ;

   c) désinfecter le liquide provenant de l'étape (a) en injectant, dans une seconde cuve de contact (2) recevant le liquide provenant de ladite première cuve, la quantité d'ozone nécessaire au maintien dans le liquide à traiter de la concentration en ozone résiduel nécessaire à ladite désinfection ;

   d) réaliser une régulation de la quantité d'ozone injectée lors de l'étape(c), ladite régulation étant effectuée par une mesure de l'ozone résiduel à la sortie de ladite seconde cuve, le temps de contact dans cette dernière étant déterminé de manière que le produit taux d'ozone résiduel C X T soit égal à la valeur requise ;

   e) injecter, outre de l'ozone dans une troisième cuve de contact (3) recevant le liquide à traiter provenant de ladite seconde cuve, une quantité de péroxyde d'hydrogène en vue d'augmenter la quantité de radicaux OH disponible pour la réaction avec les polluants à éliminer par oxydation ;

   f) réaliser une régulation de la quantité d'ozone injectée dans ladite troisième cuve, proportionnellement au débit du liquide à traiter et une régulation de la quantité de péroxyde d'hydrogène injectée, qui est également fonction du liquide à traiter, la régulation étant réalisée de manière à maintenir à une valeur prédéterminée le rapport massique péroxyde d'hydrogène/ozone et,

   g) évacuer l'eau traitée de ladite troisième cuve.

2. Procédé selon la revendication 1 caractérisé en ce que l'injection d'ozone dans les différentes étapes (a), (c) et (e) est effectuée soit sous la forme d'un mélange gazeux, soit sous la forme de solutions concentrées d'ozone.

3. Réacteur pour l'ozonation optimisée des eaux destinées à la consommation humaine mettant en oeuvre un procédé selon l'une des revendications précédentes, caractérisé en ce qu'il comporte, disposées en série :

   - une première cuve de contact (1) recevant l'eau à traiter, comportant des moyens pour l'injection d'ozone dans le liquide à traiter (4) et un système de régulation (8) pour le contrôle de la quantité d'ozone devant être injectée dans ladite première cuve ainsi qu'un capteur (7) positionné sur la sortie de ladite première cuve afin de mesurer la concentration en ozone résiduel nécessaire à la désinfection, dans le liquide à traiter ;

   - une seconde cuve de contact (2) comportant des moyens pour injecter dans le liquide provenant de ladite première cuve, la quantité d'ozone nécessaire à la désinfection dudit liquide et un système de régulation (11) de la quantité d'ozone à injecter dans ladite seconde cuve, ainsi qu'un capteur (10) mesurant la quantité d'ozone résiduel à la sortie de ladite cuve (2) et,

   - une troisième cuve de contact (3) comportant des moyens pour injecter simultanément de l'ozone et du péroxyde d'hydrogène dans le liquide provenant de ladite seconde cuve et un premier système de régulation (13) de la quantité d'ozone injectée, ainsi qu'un capteur (5) mesurant le débit du liquide à traiter (4), ledit premier système de régulation (13) contrôlant la quantité d'ozone injectée en fonction dudit débit et, un second système de régulation (15) de la quantité de péroxyde d'hydrogène injectée, ledit second système de régulation étant sous la commande dudit capteur (5).

4. Réacteur selon la revendication 3 caractérisé en ce que chacune, ou l'une quelconque des cuves de contact (1, 2, 3) comporte des moyens de cloisonnement (17), tels que notamment cloisons, baffles, le nombre et la disposition desdits moyens de cloisonnement étant choisis de manière à permettre l'établissement d'un flux piston au travers de la cuve considérée.

**Claims**

1. Process for the optimized ozonization of water intended for human consumption, in which the direct oxidation action of the ozone is completed by radical oxidation action of the ozone, characterized in that it comprises the following successive stages:

    a) in a first contact tank (1), subjecting the water to be treated to the direct, rapid oxidizing action of ozone contacted with the liquid to be treated in said tank,
    b) controlling the ozone quantity to be injected during stage a), whilst measuring the residual ozone concentration, in the liquid to be treated, necessary for disinfection,
    c) disinfecting the liquid from stage a) by injecting, into a second contact tank (2) receiving the liquid from the first tank, the ozone quantity necessary for maintaining in the liquid to be treated the residual ozone concentration necessary for said disinfection,
    d) regulating the ozone quantity injected during stage c), said regulation taking place by a measurement of the residual ozone on leaving the second tank, the contact time in the latter being determined in such a way that the residual ozone level product C X T is equal to the requisite value,
    e) injecting a hydrogen peroxide quantity, in addition to ozone, into a third contact tank (3) receiving the liquid to be treated and coming from the second tank, with a view to increasing the OH radical quantity available for the reaction with the pollutants to be eliminated by oxidation,
    f) regulating the ozone quantity injected into said third tank, in proportion to the flow rate of the liquid to be treated, and regulating the injected hydrogen peroxide quantity, which is also a function of the liquid to be treated, regulation taking place in such a way as to maintain at a predetermined level the hydrogen peroxide: ozone mass ratio, and
    g) discharging the treated water from said third tank.

2. Process according to claim 1, characterized in that the ozone injection in the different stages (a), (c) and (e) takes place either in the form of a gaseous mixture, or in the form of concentrated ozone solutions.

3. Reactor for optimized ozonization of water intended for human consumption implementing a process according to any one of the preceding claims, characterized in that it comprises in series:

    - a first contact tank (1) receiving the water to be treated, having means for injecting ozone into the liquid to be treated (4) and a regulating system (8) for controlling the ozone quantity to be injected into said first tank, as well as a sensor (17) positioned at the outlet of said first tank for measuring the residual ozone concentration necessary for disinfection, in the liquid to be treated,
    - a second contact tank (2) having means for injecting into the liquid from the first tank, the ozone quantity necessary for the disinfection of said liquid and a system (11) for regulating the ozone quantity to be injected into said second tank, as well as a sensor (10) measuring the residual ozone quantity on leaving said tank (2) and
    - a third contact tank (3) having means for simultaneously injecting ozone and hydrogen peroxide into the liquid coming from said second tank and a first system (13) for regulating the injected ozone quantity, as well as a sensor (5) measuring the flow rate of the liquid to be treated (4), said first regulating system (13) controlling the injected ozone quantity as a function of said flow rate and, a second system (15) for regulating the injected hydrogen peroxide quantity, said second regulating system being under the control of said sensor (5).

4. Reactor according to claim 3, characterized in that each or a random one of the contact tanks (1, 2, 3) has partitioning means (17), such as partitions or baffles, the number and arrangement of said partitioning means being chosen in such a way as to make it possible to establish a piston flow through the tank in question.

## Patentansprüche

1. Verfahren zur optimierten Ozonisierung von Wasser, das für den menschlichen Verbrauch bestimmt ist, in welchem die direkte Oxidationswirkung des Ozons von dessen radikalischer Oxidationswirkung ergänzt wird, **dadurch gekennzeichnet, daß** es die aufeinanderfolgenden Stufen

   a) das aufzubereitende Wasser in einem ersten Kontaktbehälter (1) der direkten und schnellen Oxidationswirkung des Ozons zu unterwerfen, das in diesem Behälter mit der zu behandelnden Flüssigkeit in Berührung gebracht wird,

   b) Regeln der in Stufe a) einzuleitenden Ozonmenge, indem die für die Desinfektion in der zu behandelnden Flüssigkeit erforderliche Restkonzentration an Ozon gemessen wird,

   c) Desinfektion der von Stufe a) kommenden Flüssigkeit, indem in einen zweiten Kontaktbehälter (2), der die vom ersten Behälter kommende Flüssigkeit aufnimmt, die Ozonmenge eingeleitet wird, welche in der zu behandelnden Flüssigkeit zur Aufrechterhaltung der für die Desinfektion erforderlichen Restkonzentration an Ozon notwendig ist,

   d) Regelung der in Stufe c) einzuleitenden Ozonmenge, welche durch Messung des Restozons am Ausgang des zweiten Behälters erfolgt, wobei die Kontaktzeit darin so festgelegt wird, daß das Produkt mit dem Restozongehalt C x T den erforderlichen Wert annimmt,

   e) Einleiten, außer dem Ozon, einer Wasserstoffperoxidmenge, um die Menge an OH-Radikalen zu vergrößern, welche für die Reaktion mit den Schadstoffen zur Verfügung steht, die durch Oxidation entfernt werden sollen, in einen dritten Kontaktbehälter (3), der die zu behandelnde Flüssigkeit aufnimmt, welche vom zweiten Behälter kommt,

   f) Regelung der in den dritten Behälter einzuleitenden Ozonmenge proportional zum Durchsatz der zu behandelnden Flüssigkeit und Regelung der einzuleitenden Wasserstoffperoxidmenge, die ebenfalls von der zu behandelnden Flüssigkeit abhängig ist, wobei die Regelung derart erfolgt, daß ein vorgegebener Wert des Wasserstoffperoxid/Ozon-Masseverhältnisses aufrechterhalten wird, und

   g) Ableiten des aufbereiteten Wassers aus dem dritten Behälter

umfaßt.

2. Verfahren nach Anspruch 1, **dadurch gekennzeichnet, daß** das Ozon in den verschiedenen Stufen a), c) und e) entweder in Form eines Gasgemischs oder in Form konzentrierter Ozonlösungen eingeleitet wird.

3. Reaktor zur optimierten Ozonisierung von Wasser, das für den menschlichen Verbrauch bestimmt ist, in welchem ein Verfahren nach einem der vorhergehenden Ansprüche durchgeführt wird, **dadurch gekennzeichnet, daß** er in Reihe geschaltet

   - einen ersten Kontaktbehälter (1), der das aufzubereitende Wasser aufnimmt und Mittel zum Einleiten des Ozons in die zu behandelnde Flüssigkeit (4), ein Regelungssystem (8) für die Einstellung der Ozonmenge, die in den ersten Behälter eingeleitet werden soll, und einen Meßwertaufnehmer (7) enthält, der am Ausgang des ersten Behälters angeordnet ist, um die für die Desinfektion in der zu behandelnden Flüssigkeit erforderliche Restkonzentration an Ozon zu messen,

   - einen zweiten Kontaktbehälter (2), der Mittel, um in die vom ersten Behälter kommende Flüssigkeit die zur Desinfektion dieser Flüssigkeit erforderliche Ozonmenge einzuleiten, ein Regelungssystem (11) für die in den zweiten Behälter einzuleitende Ozonmenge und einen Meßwertaufnehmer (10) enthält, der am Ausgang dieses Behälters (2) die Restmenge an Ozon mißt, und

   - einen dritten Kontaktbehälter (3), der Mittel, um gleichzeitig Ozon und Wasserstoffperoxid in die vom zweiten Behälter kommende Flüssigkeit einzuleiten, ein erstes Regelungssystem (13) für die einzuleitende Ozonmenge sowie einen Meßwertaufnehmer (5), der den Durchsatz der zu behandelnden Flüssigkeit (4) mißt, wobei vom ersten Regelungssystem (13) die einzuleitende Ozonmenge in Abhängigkeit von diesem Durchsatz eingestellt wird, und ein zweites Regelungssystem (15) für die einzuleitende Wasserstoffperoxidmenge enthält, wobei das zweite Regelungssystem vom Meßwertaufnehmer (5) gesteuert wird, umfaßt.

4. Reaktor nach Anspruch 3, **dadurch gekennzeichnet, daß** jeder oder ein beliebiger der Kontaktbehälter (1, 2, 3) Unterteilungsmittel (17) wie insbesondere Umlenkbleche und Prallbleche enthält, deren Anzahl und Anordnung derart gewählt werden, daß sie die Herausbildung einer Pfropfenströmung durch den betreffenden Behälter ermöglichen.

FIG. Unique